# EUROPÄISCHE PATENTANMELDUNG

(11) **EP 1 749 691 A1**
(43) Veröffentlichungstag der Anmeldung: **07.02.2007**
(21) Anmeldenummer: 05017169.3
(22) Anmeldetag: 06.08.2005
(51) Int. Cl.: B60M 1/16

(54) **Abspannisolator**

(71) Anmelder: Fahrleitungsbau GmbH, D-45329 Essen (DE)
(72) Erfinder: Linnemann, Manfred, 45289 Essen (DE)
(74) Vertreter: Rohmann, Michael

(57) **Zusammenfassung**

Abspannisolator zur Isolation von Fahrleitungen, insbesondere für den Nahverkehr, mit zumindest zwei im Abstand voneinander angeordneten Anschlussaugen, wobei die Anschlussaugen über zumindest zwei Isolierstege miteinander verbunden sind. Es ist zumindest eine quer zur Längsrichtung der Isolierstege angeordnete Abtropfscheibe vorgesehen und diese Abtropfscheibe umgibt beide Isolierstege.

## Beschreibung

Die Erfindung betrifft einen Abspannisolator zur Isolation von Fahrleitungen, insbesondere für den Nahverkehr, mit zumindest zwei im Abstand voneinander angeordneten Anschlussaugen, wobei die Anschlussaugen über zumindest zwei Isolierstege miteinander verbunden sind. Die beiden Isolierstege sind in der Regel parallel zueinander angeordnet. - Abspannisolatoren werden insbesondere in Oberleitungsnetze des Nahverkehrs als Isolatoren zwischen den stromführenden und den nicht stromführenden Verspannungen eingebaut.

Aus der Praxis sind Abspannisolatoren bekannt, deren Isolierstege aus mit einer Schutzbeschichtung versehenen Glasfasern bestehen. In diesem Zusammenhang ist es bekannt, die Glasfasern mit Polyamid zu umspritzen. Abspannisolatoren sind normalerweise Witterungseinflüssen und Verschmutzungen aus Umwelt bzw. Verkehr ausgesetzt. Auf ihren Oberflächen sammelt sich leicht Feuchtigkeit wie beispielsweise Regenwasser. In einem ungünstigen Fall kann sich zwischen den Anschlussaugen eine Flüssigkeitsbrücke bzw. ein durchgängiger Flüssigkeitsstrom bilden, so dass eine leitfähige Verbindung entsteht. Die Isolierfunktion ist dann nicht mehr gewährleistet und es kann zu unerwünschten Überschlägen kommen. Die sich auf den Oberflächen der Abspannisolatoren ansammelnde Feuchtigkeit enthält häufig auch Schmutzpartikel bzw. gelöste Salze. Es versteht sich, dass dadurch die Isolierfestigkeit erheblich beeinträchtigt werden kann. Man hat bereits versucht dieses Problem mit Hilfe von Abtropfringen zu lösen, die jeweils über den Umfang der einzelnen Isolierstege umlaufen. Diese Abtropfringe sollen die Flüssigkeit bzw. Feuchtigkeit gleichsam ableiten, damit sich keine durchgängige Flüssigkeitsbrücke zwischen den Anschlussaugen ausbilden kann. Vor allem bei höheren Spannungen, wie bei Gleichspannungen bis zu 3 kV haben sich diese Maßnahmen aber bei vielen bekannten Abspannisolatoren nicht bewährt.

Der Erfindung liegt das technische Problem zugrunde, einen Abspannisolator der eingangs genannten Art anzugeben, der sich durch eine funktionssichere und effektive Isolierwirkung auch bei Feuchtigkeitseinwirkung auszeichnet und zwar insbesondere bei höheren Spannungen, wie bei Gleichspannungen bis zu 3 kV.

Zur Lösung dieses technischen Problems lehrt die Erfindung einen Abspannisolator zur Isolation von Fahrleitungen, insbesondere für den Nahverkehr, mit zumindest zwei im Abstand voneinander angeordneten Anschlussaugen, wobei die Anschlussaugen über zumindest zwei Isolierstege miteinander verbunden sind, wobei zumindest eine quer zur Längsrichtung der Isolierstege angeordnete Abtropfscheibe vorgesehen ist und wobei diese Abtropfscheibe beide Isolierstege umgibt.

Die Anschlussaugen sind vorzugsweise ringförmig bzw. im Querschnitt kreisförmig ausgebildet. Sie bestehen zweckmäßigerweise aus einem Metall, können grundsätzlich aber auch aus einem Kunststoff bestehen. Es liegt im Rahmen der Erfindung, dass die beiden Isolierstege parallel oder im Wesentlichen parallel zueinander angeordnet sind. Die Isolierstege verbinden die beiden Anschlussaugen miteinander und sie sind vorzugsweise an ihren Enden miteinander verbunden, indem sie an Verbindungsabschnitte angeschlossen sind, die die Isolierstege des Anschlussauges jeweils halbkreisförmig umlaufen.

Es liegt im Rahmen der Erfindung, dass eine erfindungsgemäße Abtropfscheibe beide Isolierstege vollständig umgibt und auch den Zwischenraum zwischen den beiden Isolierstegen vollständig überbrückt bzw. ausfüllt. Dass die erfindungsgemäße Abtropfscheibe quer zur Längsrichtung der beiden Isolierstege angeordnet ist, meint insbesondere, dass die Abtropfscheibe senkrecht oder im Wesentlichen senkrecht zur Längsrichtung der Isolierstege angeordnet ist. Die beiden Isolierstege durchgreifen gleichsam die sie umgebende Abtropfscheibe. Zweckmäßigerweise sind keine Öffnungen in der Abtropfscheibe vorgesehen, die die Abtropfscheibe parallel zur Längsrichtung der Isolierstege durchsetzen.

Es liegt im Rahmen der Erfindung, dass in Längsrichtung der Isolierstege eine Mehrzahl von jeweils beide Isolierstege umgebenden Abtropfscheiben hintereinander angeordnet ist. Dabei sind diese Abtropfscheiben vorzugsweise parallel zueinander oder im Wesentlichen parallel zueinander orientiert. Zweckmäßigerweise haben die Abtropfscheiben gleiche Abstände oder im Wesentlichen gleiche Abstände zueinander. Mehrzahl von Abtropfscheiben meint insbesondere zumindest drei Abtropfscheiben, vorzugsweise zumindest vier Abtropfscheiben und bevorzugt zumindest fünf Abtropfscheiben.

Zweckmäßigerweise hat die Abtropfscheibe bzw. haben die Abtropfscheiben einen kreisförmigen Querschnitt bzw. einen im Wesentlichen kreisförmigen Querschnitt. Nach bevorzugter Ausführungsform der Erfindung sind zumindest zwei Abtropfscheiben mit unterschiedlichem Durchmesser vorgesehen. Eine Ausführungsform, die sich durch besondere Vorteile auszeichnet, ist dadurch gekennzeichnet, dass zumindest zwei erste Abtropfscheiben und zumindest eine zwischen den beiden ersten Abtropfscheiben angeordnete zweite Abtropfscheibe vorgesehen sind und dass der Durchmesser der ersten Abtropfscheibe größer ist als der Durchmesser der zweiten Abtropfscheibe. Dabei weisen die vorgenannten Abtropfscheiben vorzugsweise einen kreisförmigen Querschnitt bzw. einen im Wesentlichen kreisförmigen Querschnitt auf. Gemäß der vorgenannten Ausführungsform ist es also zweckmäßig, wenn die äußeren, d. h. die anschlussaugenseitigen Abtropfscheiben einen großen Durchmesser aufweisen, während eine dazwischen angeordnete Abtropfscheibe bzw. dazwischen angeordnete Abtropfscheiben einen geringeren Durchmesser haben. Es liegt im Übrigen im Rahmen der Erfindung, dass die Durchmesser der beiden vorgenannten ersten Abtropfscheiben gleich oder im Wesentlichen gleich sind. Wenn gemäß einer besonders bevorzugten Ausführungsform der Erfindung drei Abtropfscheiben vorgesehen sind, hat die mittlere Abtropfscheibe zweckmäßigerweise einen geringeren Durchmesser als die beiden äußeren Abtropfscheiben. Wenn gemäß einer anderen Ausführungsform vier Abtropfscheiben vorgesehen werden, hat zumindest eine der beiden inneren Abtropfscheiben einen geringeren Durchmesser als die beiden äußeren Abtropfscheiben. Bei einer ebenfalls bevorzugten Ausführungsform der Erfindung sind fünf Abtropfscheiben vorgesehen. Dabei haben vorzugsweise drei Abtropfscheiben einen größeren Durchmesser und zwei Abtropfscheiben einen kleineren Durchmesser. Die Abtropfscheiben werden dabei bezüglich ihrer Durchmesser zweckmäßigerweise in der Reihenfolge "groß - klein - groß - klein
- groß" angeordnet. Vorzugsweise haben die drei großen Abtropfscheiben den gleichen Durchmesser oder einen im Wesentlichen gleichen Durchmesser und zweckmäßigerweise haben auch die kleinen Abtropfscheiben den gleichen Durchmesser oder im Wesentlichen den gleichen Durchmesser. Wie oben bereits dargelegt haben die Abtropfscheiben, insbesondere die fünf Abtropfscheiben des vorstehend erläuterten Ausführungsbeispiels zweckmäßigerweise gleiche Abstände voneinander.

Gemäß einer bevorzugten Ausführungsform der Erfindung beträgt das Verhältnis des Abstandes a der Anschlussaugen zum Durchmesser d der Abtropfscheiben 1 bis 2, vorzugsweise 1,0 bis 1,8. Der Abstand a der Anschlussaugen wird dabei von der Mitte des einen Anschlussauges zur Mitte des anderen Anschlussauges gemessen.

Vorzugsweise beträgt das Verhältnis der Breite b des Abspannisolators im Bereich der Isolierstege zum Durchmesser d der Abtropfscheiben 0,3 bis 0,9, bevorzugt 0,4 bis 0,8, besonders bevorzugt 0,4 bis 0,7. Die Breite b des Abspannisolators im Bereich der Isolierstege umfasst die beiden Breiten der Isolierstege und die Breite des Zwischenraums zwischen den beiden Isolierstegen.

Nach einer bevorzugten Ausführungsform der Erfindung beträgt das Verhältnis der Dicke D der Isolierstege zum Durchmesser d der Abtropfscheiben 0,1 bis 0,2, vorzugsweise 0,11 bis 0,19. Dicke D der Isolierstege meint dabei vorzugsweise die größte Dicke der Isolierstege.

Eine bevorzugte Ausführungsform ist dadurch gekennzeichnet, dass das Verhältnis des Abstandes A zwischen den Abtropfscheiben und dem Durchmesser d der Abtropfscheiben 0,05 bis 0,4, vorzugsweise 0,1 bis 0,3 beträgt.

Zweckmäßigerweise beträgt das Verhältnis des Abstandes a zwischen den Anschlussaugen zum Abstand A zwischen den Abtropfscheiben 3 bis 15, vorzugsweise 4 bis 14, wenn drei bis sieben Abtropfscheiben zwischen den beiden Anschlussaugen vorgesehen sind. Das vorgenannte Verhältnis a/A beträgt bevorzugt 8 bis 12 und sehr bevorzugt 9 bis 11, wenn vier bis sechs, insbesondere fünf Abtropfscheiben zwischen den beiden Anschlussaugen angeordnet sind. Sind dagegen drei Abtropfscheiben vorgesehen, so beträgt das Verhältnis a/A bevorzugt 3 bis 7, sehr bevorzugt 4 bis 6.

Eine Ausführungsform, der im Rahmen der Erfindung besondere Bedeutung zukommt, ist dadurch gekennzeichnet, dass die Abtropfscheiben aus Silikon bestehen bzw. im Wesentlichen aus Silikon bestehen. Vorzugsweise weisen die Abtropfscheiben zumindest eine Oberflächenbeschichtung aus Silikon auf.

Der Kern der beiden Isolierstege besteht nach besonders bevorzugter Ausführungsform aus Isolierfasern, wobei die lsolierfasern die Anschlussaugen zumindest teilweise umschlingen. Bei diesen Isolierfasern handelt es sich vorzugsweise um Glasfasern. Der Kern der Isolierstege wird von einer Mehrzahl von Isolierfasern, vorzugsweise Glasfasern gebildet. Dieser Kern besteht also gleichsam aus einem Isolierfaserstrang bzw. aus Isolierfasersträngen.

Vorzugsweise ist auf die Isolierfaser der Isolierstege eine Beschichtung aus einem Haftvermittler aufgebracht. Die Isolierfasern bzw. das Isolierfaseraggregat weist also eine Oberflächenbeschichtung aus diesem Haftvermittler auf. Zweckmäßigerweise handelt es sich bei diesem Haftvermittler um einen Primer aus zumindest einem Kunststoff bzw. aus zumindest einem Kunstharz.

Nach sehr bevorzugter Ausführungsform der Erfindung ist die auf die Isolierfasern aufgebrachte Haftvermittlerschicht der Isolierstege mit Silikon ummantelt. Nach bevorzugter Ausführungsform wird die Silikonschicht bzw. die Silikonummantelung durch Aufspritzen von flüssigem Silikon verwirklicht. Das flüssige Silikon wird dabei zweckmäßigerweise bei hohem Druck, beispielsweise bei 300 Bar aufgespritzt.

Nach besonders bevorzugter Ausführungsform der Erfindung sind die Isolierstege mit Silikon ummantelt und außerdem bestehen die Abtropfscheiben aus Silikon oder die Abtropfscheiben weisen zumindest eine Oberflächenbeschichtung aus Silikon auf.

Gemäß einer bevorzugten Ausführungsform der Erfindung sind die Isolierstege im Querschnitt an zumindest einer Seite abgerundet ausgebildet. Die Isolierstege weisen an dieser Seite bzw. an diesen Seiten gleichsam eine ballige Ausgestaltung auf. Querschnitt meint hier den zur Längsrichtung der Isolierstege senkrechten Querschnitt. Zweckmäßigerweise sind die Isolierstege im Querschnitt rechteckförmig oder trapezförmig ausgebildet. Dann ist zumindest eine Rechteckseite .bzw. eine Trapezseite des Isoliersteges abgerundet ausgebildet. Bevorzugt ist zumindest die dem benachbarten Isoliersteg abgewandte Seite eines Isoliersteges im Querschnitt abgerundet ausgebildet. Vorzugsweise ist auch die dem benachbarten Isoliersteg zugewandte Seite eines Isoliersteges im Querschnitt abgerundet ausgebildet. Wenn nach bevorzugter Ausführungsform der Erfindung eine Silikonummantelung der Isolierstege vorgesehen ist, versteht es sich, dass die Silikonummantelung die Abrundung bzw. die Abrundungen ausbildet.

Der Erfindung liegt die Erkenntnis zugrunde, dass sich ein erfindungsgemäßer Abspannisolator durch eine überraschend effektive Isolierwirkung insbesondere auch bei stärkeren Feuchtigkeitseinflüssen bzw. Witterungseinflüssen auszeichnet. Die erfindungsgemäße Ausgestaltung des Abspannisolators verhindert funktionssicher, dass sich eine durchgehende Flüssigkeitsbrücke bzw. eine leitfähige Verbindung zwischen den Anschlussaugen ausbilden kann. Das gilt vor allem für höhere Spannungsbereiche, beispielsweise für Spannungsbereiche von bis zu 3 kV. Für die Lösung des erfindungsgemäßen technischen Problems hat sich insbesondere die Kombination der Ummantelung bzw. Oberflächenbeschichtung aus Silikon mit den erfindungsgemäßen Abtropfringen bewährt. Weiterhin kommt auch der Abrundung der Isolierstege in diesem Zusammenhang eine vorteilhafte Bedeutung zu.

Nachfolgend wird die Erfindung anhand einer lediglich ein Ausführungsbeispiel darstellenden Zeichnung näher erläutert. Es zeigen in schematischer Darstellung:
- Fig. 1: eine Frontansicht eines erfindungsgemäßen Abspannisolators, in einer ersten Ausführungsform
- Fig. 2: eine Draufsicht auf dem Gegenstand gemäß Fig. 1
- Fig. 3: einen Schnitt A-B durch den Gegenstand nach Fig. 1,
- Fig. 4: den Gegenstand nach Fig. 1 in einer zweiten, bevorzugten Ausführungsform und
- Fig. 5: eine Draufsicht auf den Gegenstand gemäß Fig. 4.

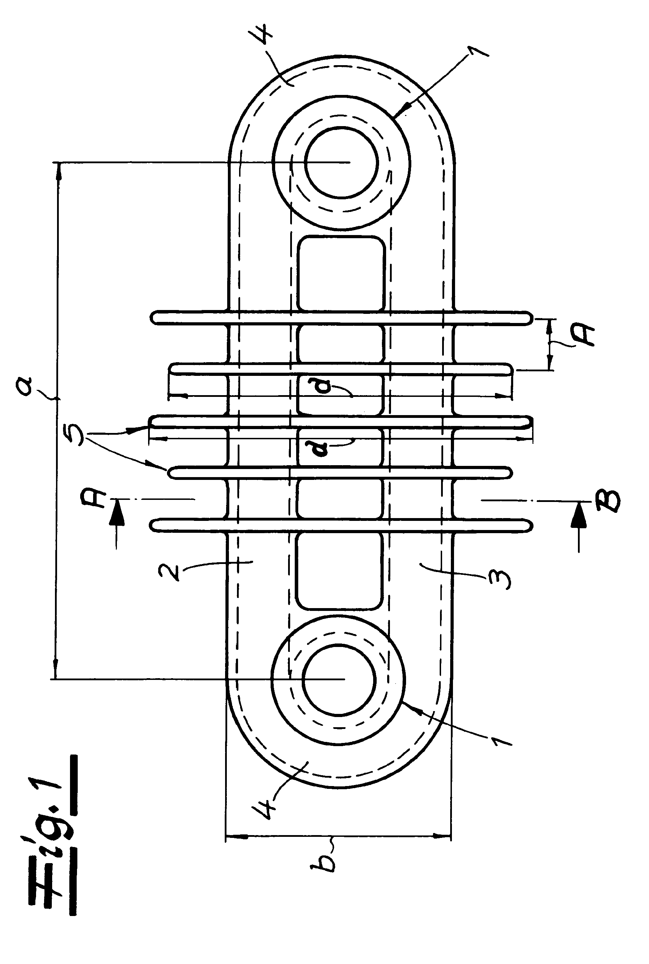

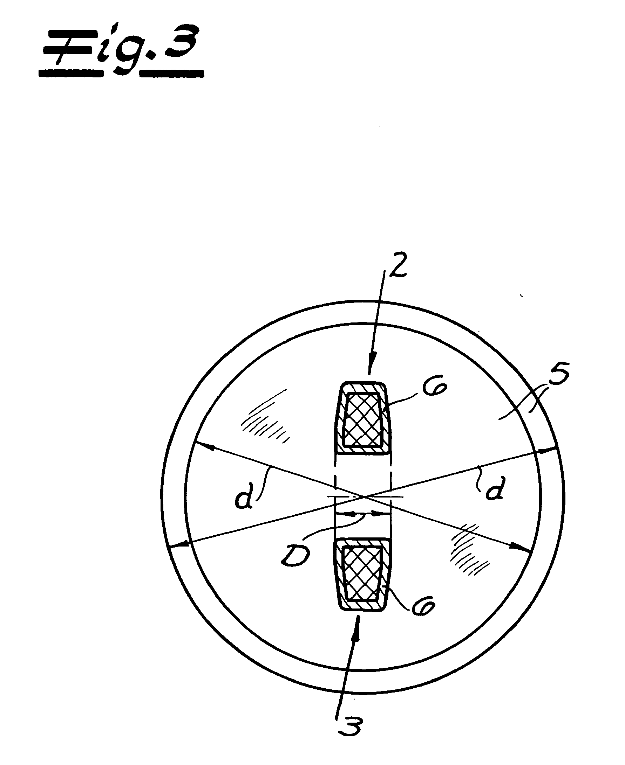

In den Figuren ist ein erfindungsgemäßer Abspannisolator zur Isolation von Fahrleitungen, insbesondere für den Nahverkehr, dargestellt. Der Abspannisolator weist zwei im Abstand a voneinander angeordnete Anschlussaugen 1 auf, die im Ausführungsbeispiel ringförmig ausgebildet sind. Die Anschlussaugen 1 mögen im Ausführungsbeispiel aus Metall bestehen. Insbesondere in den Figuren 1 und 3 ist erkennbar, dass die beiden Anschlussaugen 1 über zwei Isolierstege 2, 3 miteinander verbunden sind. Die Isolierstege 2, 3 sind ihrerseits miteinander verbunden, und zwar über zwei Verbindungsabschnitte 4, die das jeweilige Anschlussauge 1 halbkreisförmig umlaufen. Die Isolierstege 2, 3 sind vorzugsweise und im Ausführungsbeispiel parallel zueinander angeordnet.

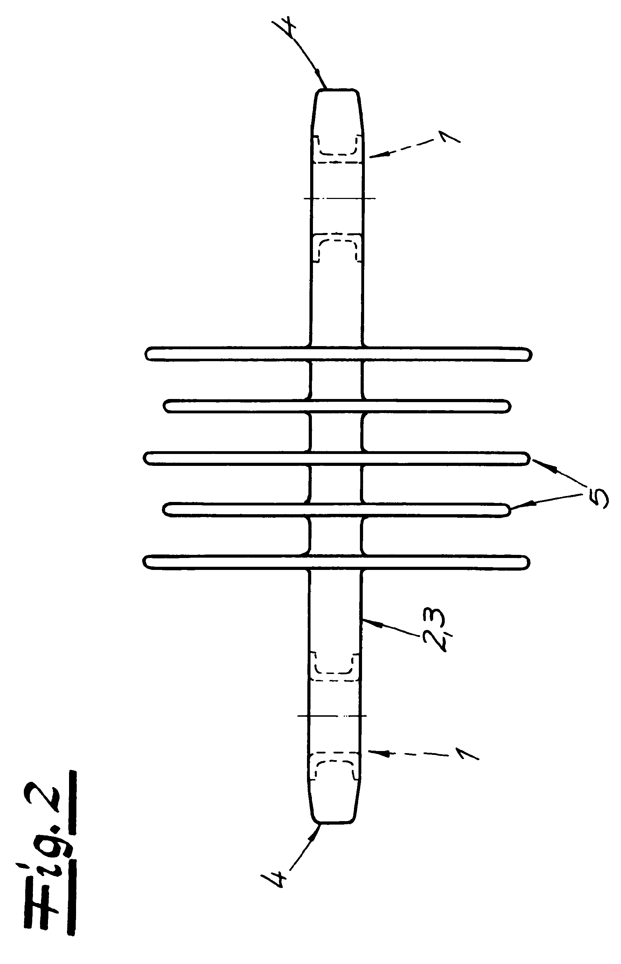

Insbesondere in den Figuren 1 und 2 ist erkennbar, dass in Längsrichtung der Isolierstege eine Mehrzahl von Abtropfscheiben 5 hintereinander angeordnet sind, wobei die Abtropfscheiben 5 jeweils quer bzw. senkrecht zur Längsrichtung der Isolierstege 2, 3 angeordnet sind. Jede Abtropfscheibe 5 umgibt erfindungsgemäß beide Isolierstege 2, 3. Mit anderen Worten dient eine Abtropfscheibe 5 gleichzeitig als Abtropfscheibe 5 für beide Isolierstege 2, 3. In der Figur 3 ist erkennbar, dass die Abtropfscheiben 5 beide Isolierstege 2, 3 jeweils vollflächig bzw. vollständig umgeben. Das gilt auch für den Zwischenraum zwischen beiden Isolierstegen 2, 3, über den sich eine Abtropfscheibe 5 ebenfalls erstreckt. Vorzugsweise sind keine Öffnungen in den Abtropfscheiben 5 vorhanden, die die Abtropfscheiben 5 parallel zur Längsrichtung der Isolierstege 2, 3 durchsetzen. Die Figuren 1 und 2 zeigen, dass die hintereinander angeordneten Abtropfscheiben 5 vorzugsweise und im Ausführungsbeispiel parallel zueinander angeordnet sind. Der Figur 3 ist entnehmbar, dass die Abtropfscheiben zweckmäßigerweise einen kreisförmigen Querschnitt aufweisen.

Im Ausführungsbeispiel nach Fig. 1 bis 3 sind fünf Abtropfscheiben 5 vorgesehen und zwar drei Abtropfscheiben 5 mit gleichem größeren Durchmesser und zwei Abtropfscheiben 5 mit gleichem kleineren Durchmesser. Es liegt im Rahmen der Erfindung, dass die zwei äußeren anschlussaugenseitigen Abtropfscheiben 5 einen größeren Durchmesser d aufweisen. Im Ausführungsbeispiel sind die Abtropfscheiben bezüglich ihres Durchmessers d in der Reihenfolge "groß - klein - groß - klein - groß" angeordnet.

Im Ausführungsbeispiel nach Fig. 1 bis 3 beträgt das Verhältnis des Abstandes a der Anschlussaugen 1 zum Durchmesser d der Abtropfscheiben 1,3 bis 1,7. Zweckmäßigerweise und im Ausführungsbeispiel beträgt das Verhältnis der Breite b des Abspannisolators im Bereich der Isolierstege 2, 3 zum Durchmesser d der Abtropfscheiben 0,5 bis 0,7. Dabei beträgt das Verhältnis der Dicke D der Isolierstege 2, 3 zum Durchmesser d der Abtropfscheiben 0,12 bis 0,17. Im Ausführungsbeispiel nach Fig. 1 bis 3 beträgt das Verhältnis des Abstandes A zwischen den Abtropfscheiben 5 und dem Durchmesser d der Abtropfscheiben 0,13 bis 0,17. Zweckmäßigerweise beträgt das Verhältnis des Abstandes a zwischen den Anschlussaugen 1 zum Abstand A zwischen den Abtropfscheiben 9 bis 11 (bei fünf Abtropfscheiben, wie im Ausführungsbeispiel nach Fig. 1 bis 3).

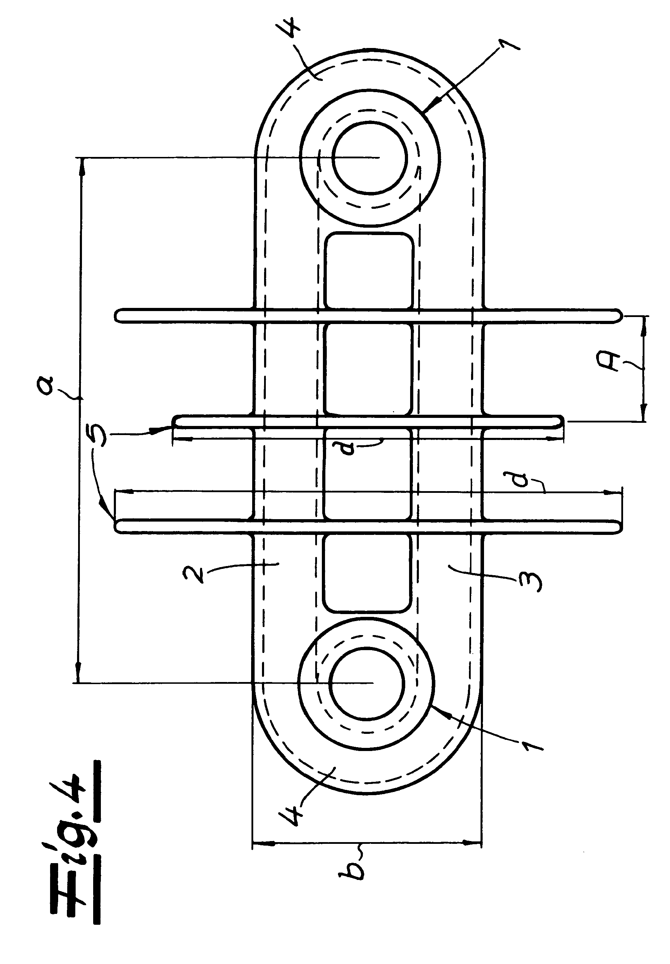

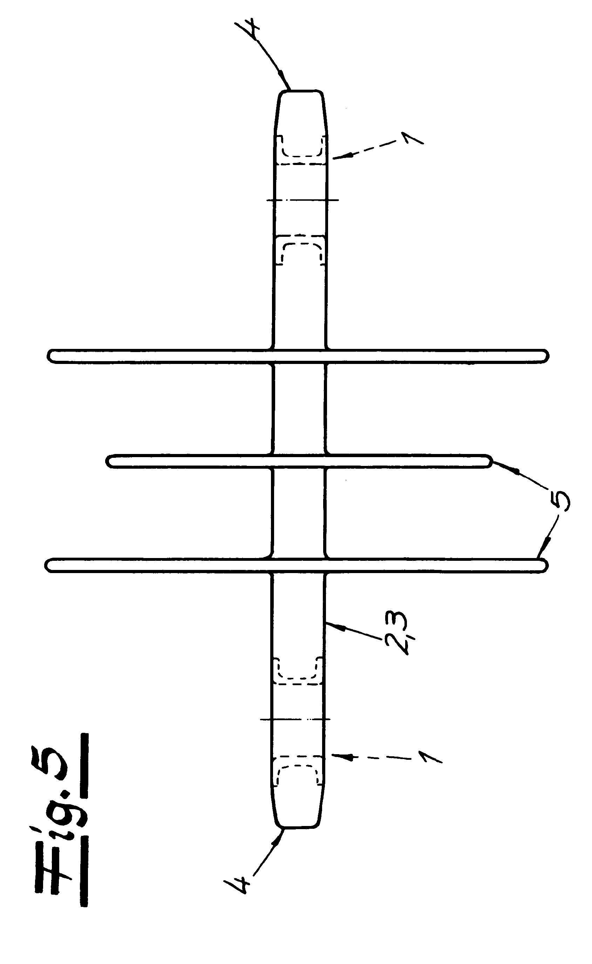

In dem bevorzugten Ausführungsbeispiel nach den Fig. 4 und 5 sind drei Abtropfscheiben 5 vorgesehen und zwar zwei Abtropfscheiben 5 mit gleichem größeren Durchmesser und eine Abtropfscheibe 5 mit kleinerem Durchmesser. Bei dieser Ausführungsform wird ein besonders gutes Abtropfen über lange Strecken erreicht, da besonders zuverlässig gewährleistet ist, dass der mittlere Ring nicht die Tropfen der äußeren Ringe aufnehmen muss. In diesem Ausführungsbeispiel beträgt das Verhältnis des Abstandes a der Anschlussaugen 1 zum Durchmesser d der Abtropfscheiben 1,0 bis 1,5. Zweckmäßigerweise beträgt das Verhältnis der Breite b des Abspannisolators im Bereich der Isolierstege 2, 3 zum Durchmesser d der Abtropfscheiben 0,4 bis 0,6. Dabei beträgt das Verhältnis der Dicke D der Isolierstege 2, 3 zum Durchmesser d der Abtropfscheiben 0,10 bis 0,15. Im Ausführungsbeispiel nach Fig. 4 und 5 beträgt das Verhältnis des Abstandes A zwischen den Abtropfscheiben 5 und dem Durchmesser d der Abtropfscheiben 0,20 bis 0,30. Das Verhältnis des Abstandes a zwischen den Anschlussaugen 1 zum Abstand A zwischen den Abtropfscheiben beträgt z.B. 3 bis 7, vorzugsweise 4 bis 6 (bei drei Abtropfscheiben, wie im Ausführungsbeispiel nach Fig. 4 und 5).

Der Kern der Isolierstege 2, 3 besteht vorzugsweise aus in den Figuren nicht näher dargestellten Glasfasern. Auf die Glasfasern ist zweckmäßigerweise eine in den Figuren ebenfalls nicht näher dargestellte Beschichtung aus einem Haftvermittler aufgebracht. Die beschichteten Glasfasern sind mit einem Silikonmantel 6 ummantelt. Im Ausführungsbeispiel bestehen auch die Abtropfscheiben 5 aus Silikon bzw. sind zumindest die Oberflächen der Abtropfscheiben 5 mit Silikon beschichtet.

Der Figur 3 ist entnehmbar, dass die Isolierstege 2, 3 an ihren Seiten abgerundet ausgebildet sind. Die entsprechenden Seitenflächen dieser Isolierstege 2, 3 sind gleichsam ballig ausgeführt. Die Isolierstege 2, 3 weisen im Ausführungsbeispiel einen trapezartigen Querschnitt auf und alle Trapezseiten sind abgerundet ausgebildet. Dabei sind die dem benachbarten Isoliersteg 2, 3 jeweils abgewandten Außenseiten sowie die dem benachbarten Isoliersteg 2, 3 jeweils zugewandten Innenseiten deutlich abgerundet ausgebildet, während die übrigen Seiten der Isolierstege 2, 3 nur geringfügig abgerundet sind.

## Patentansprüche

1. Abspannisolator zur Isolation von Fahrleitungen, insbesondere für den Nahverkehr, mit zumindest zwei im Abstand voneinander angeordneten Anschlussaugen (1), wobei die Anschlussaugen (1) über zumindest zwei Isolierstege (2, 3) miteinander verbunden sind, wobei zumindest eine quer zur Längsrichtung der Isolierstege (2, 3) angeordnete Abtropfscheibe (5) vorgesehen ist und wobei diese Abtropfscheibe (5) beide Isolierstege (2, 3) umgibt.

2. Abspannisolator nach Anspruch 1, wobei in Längsrichtung der lsolierstege (2, 3) eine Mehrzahl von jeweils beide Isolierstege (2, 3) umgebenden Abtropfscheiben (5) hintereinander angeordnet ist.

3. Abspannisolator nach einem der Ansprüche 1 oder 2, wobei eine Abtropfscheibe (5) einen kreisförmigen Querschnitt aufweist.

4. Abspannisolator nach einem der Ansprüche 1 bis 3, wobei zumindest zwei Abtropfscheiben (5) mit unterschiedlichem Durchmesser d vorgesehen sind.

5. Abspannisolator nach Anspruch 4, wobei zumindest zwei erste Abtropfscheiben (5) und zumindest eine zwischen den beiden ersten Abtropfscheiben (5) angeordnete zweite Abtropfscheibe (5) vorgesehen sind und wobei der Durchmesser d der ersten Abtropfscheiben (5) größer ist als der Durchmesser d der zweiten Abtropfscheibe (5).

6. Abspannisolator nach einem der Ansprüche 1 bis 5, wobei das Verhältnis des Abstandes a der Anschlussaugen (1) zum Durchmesser d der Abtropfscheiben (5) 1 bis 2, vorzugsweise 1,0 bis 1,8 beträgt.

7. Abspannisolator nach einem der Ansprüche 1 bis 6, wobei das Verhältnis der Breite b des Abspannisolators im Bereich der Isolierstege (2, 3) zum Durchmesser d der Abtropfscheiben (5) 0,3 bis 0,9, vorzugsweise 0,4 bis 0,8 beträgt.

8. Abspannisolator nach einem der Ansprüche 1 bis 7, wobei das Verhältnis der Dicke D der Isolierstege (2, 3) zum Durchmesser d der Abtropfscheiben (5) 0,1 bis 0,2, vorzugsweise 0,11 bis 0,19 beträgt.

9. Abspannisolator nach einem der Ansprüche 1 bis 8, wobei das Verhältnis des Abstandes A zwischen den Abtropfscheiben (5) und dem Durchmesser (d) der Abtropfscheiben (5) 0,05 bis 0,4, vorzugsweise 0,1 bis 0,3 beträgt.

10. Abspannisolator nach einem der Ansprüche 1 bis 9, wobei das Verhältnis des Abstandes a zwischen den Anschlussaugen (1) zum Abstand A zwischen den Abtropfscheiben (5) 3 bis 15, vorzugsweise 4 bis 14 beträgt, wenn drei bis sieben Abtropfscheiben (5) zwischen den beiden Anschlussaugen (1) vorgesehen sind.

11. Abspannisolator nach einem der Ansprüche 1 bis 10, wobei die zumindest eine Abtropfscheibe (5) aus Silikon besteht oder eine Oberflächenbeschichtung aus Silikon aufweist.
